# EUROPEAN PATENT SPECIFICATION

(11) **EP 4 632 875 B1**
(45) Date of publication and mention of the grant of the patent: **09.09.2026**
(21) Application number: 24190347.5
(22) Date of filing: 23.07.2024
(51) Int. Cl.: H01M 10/613, H01M 10/655, H01M 10/625, H01M 10/647, H01M 10/651, H01M 10/6555, H01M 10/6567, H01M 10/052

(54) **LIQUID-COOLING HEAT DISSIPATION PLATE AND THE LITHIUM BATTERY MODULE CONTAINING THE SAME**
WÄRMEABLEITUNGSPLATTE ZUR FLÜSSIGKEITSKÜHLUNG UND LITHIUMBATTERIEMODUL DAMIT
PLAQUE DE DISSIPATION DE CHALEUR À REFROIDISSEMENT PAR LIQUIDE ET MODULE DE BATTERIE AU LITHIUM LA CONTENANT

(30) Priority: 12.04.2024 TW 113113851
(43) Date of publication of application: 15.10.2025
(73) Proprietor: Top Rank Technology Limited, Apia (WS)
(72) Inventor: WANG, Tien-Lai, Apia (WS); WANG, Tzu-Yu, Apia (WS); WANG, Cheng-Yu, Apia (WS); LEE, Meng-Yu, Apia (WS)
(74) Representative: Lermer, Christoph

(56) References cited:
- CN-U- 201 893 330
- CN-U- 207 800 846
- CN-U- 212 725 426

## Description

### CROSS REFERENCE TO RELATED APPLICATION

This application claims the benefits of Taiwan application Serial No. 113113851, filed on April 12, 2024.

### TECHNICAL FIELD

The present invention relates in general to a liquid-cooling heat dissipation plate that can be used for lithium battery modules. The present invention further relates to a lithium battery module including the liquid-cooling heat dissipation plate.

### BACKGROUND

A large number of researches on lithium batteries have made their capabilities rapidly improving in terms of voltage, energy density, charge and discharge efficiency, and cycle life, making lithium batteries more suitable for use in daily mobile devices, electric vehicles, and even large-scale energy storage systems. All of the application possess extremely important strategic positions. With the continuous development of lithium battery materials and structures, the energy density of lithium batteries is also constantly improving. Larger charge and discharge currents are accompanied by a great amount of heat energy.

Lithium battery modules are composed of thousands or even tens of thousands of lithium battery units closely arranged in a limited small space, such as the space of a vehicle chassis. The large amount of heat rapidly generated by lithium batteries during the charging and discharging process, poor heat dissipation efficiency is regularly resulting in heat accumulation, leading the temperature of the whole lithium battery module rises rapidly, and resulting in safety issues.

The characteristics of lithium battery limits itself in a narrow range of the optimal operating temperature (about 15°C ~ 40°C). When the temperature is too low, the output power of the lithium battery decreases, while when the temperature is too high, the accelerated exothermic reaction will cause corrosion of lithium battery material, lead to battery degradation, and even cause thermal runaway safety issues.

In addition to maintaining the individual lithium battery unit in the optimal operating temperature range, it is even more difficult to keep the entire lithium battery module or the individual small modules that make up the entire module staying within the optimal operating temperature range. The thermal management systems commonly used in lithium battery modules include: air cooling, indirect liquid cooling, direct liquid cooling or immersion cooling, phase change cooling, heat pipe or vapor chamber cooling, and combinations of the above methods. However, in terms of commercial applications, considering factors such as cost, safety, heat dissipation capacity, weight, configuration space etc., only air-cooling and liquid-cooling have been widely used for lithium battery module cooling in the field of electric vehicles. It should be noted that the thermal conductivity of liquid is at least 25 times than that of air, and the amount of heat that a volume of liquid can take away is nearly 3,000 times than that of the same volume of air. Besides, since the lithium battery units are usually closely arranged in a lithium battery module, the air-cooling cannot allow air flows efficiently between each lithium battery unit to dissipate heat. Therefore, the heat dissipation efficiency of air-cooling is insufficient to cope with the closely arranged lithium battery modules having high energy density. The heat dissipation efficiency of liquid-cooling is significantly better than that of air-cooling due to the high heat capacity of the coolant.

Generally, the liquid-cooling heat dissipation devices or systems refer to indirect liquid-cooling heat dissipation, which means the coolant is used to circulate in the pipelines or flow channels of the heat dissipation device. The heat generated by the lithium battery is then taken away by the coolant and dissipated outside the battery module. The design of the structure of a liquid-cooling heat dissipation device not only needs to consider the efficiency of heat dissipation and temperature consistency between lithium battery units within the module, but also needs to strictly consider the safety of the module to prevent leakage of coolant.

Typically, the lithium battery units in the modules are cylindrical, square or plate-shaped (or sheet-shaped). Taking Tesla electric vehicles as an example, its lithium battery modules are composed of cylindrical lithium battery units. The liquid-cooling device used in it comprises two curved sheet-shaped liquid-cooling plates. The two curved sheet-shaped liquid-cooling plates are each equipped with a liquid inlet and a liquid outlet at both ends. The coolant is then injected from the liquid inlet for heat exchange and then flow out from the liquid outlet to take away the heat. Two curved sheet-shaped liquid cooling plates meander along the contours of the closely arranged cylindrical lithium battery units and closely contact with the upper and lower halves of the cylindrical lithium battery unit separately. The liquid-cooling plate that contacts with the upper half of the battery and the liquid-cooling plate that contacts with the lower half of the battery have opposite flow directions to reduce the temperature difference between the front and rear sections of the coolant flow path.

For modules composed of square or plate-shaped battery units, a typical method of liquid-cooling is to have liquid-cooling plates lay on and in contact with the surfaces of the overall module. The coolant flows along the coolant path within the liquid-cooling plates and undergoes heat exchange to take away the heat of the module. Additionally, thermal conductive plates, liquid-cooling tubes, etc. are used to dissipate the heat between battery units in order to reduce the weight and cost of the lithium battery module. The liquid-cooling plate used in this configuration should be rigid enough to resist deformation or break, and also, it should have good cooling efficiency. For example, the prior art CN111630708A discloses a cooling component for a battery module, including an upper plate and a lower plate, and a supporting member disposed between the upper plate and the lower plate. In this prior art, the upper plate and the lower plate are engaged and formed an accommodation space therebetween for disposing the supporting member. The supporting member is used to increase the overall rigidity of the cooling component and support the upper and lower plates to avoid deformation caused by external forces. The supporting member can be formed by extrusion molding to form a recessed coolant flow path. Although the design of the supporting member can increase the rigidity of the cooling component and its heat dissipation efficiency, addition of the supporting member also significantly increases the weight of the cooling component making it heavier than the 2-piece liquid-cooling plate. This is not in compliance with the trend of the lightweighting of electric vehicles.

CN 201893330 U discloses an another example of a cooling component for a battery module.

### SUMMARY

In order to solve the above-mentioned problems of the traditional liquid-cooling heat dissipation plates (or devices/systems), such as rigidity, heat dissipation efficiency, weight, and safety, raised while applying them in the lithium battery modules for heat dissipation, the present invention provides a liquid-cooling heat dissipation plate that can be used for the lithium battery module as recited in claim 1, which is directly made of a metal sheet (such as magnesium alloy or aluminum alloy) into a heat dissipation component by integral molding, and then the two heat dissipation components are engaged to each other to form a liquid flow chamber of the liquid-cooling heat dissipation plate. The heat dissipation component can be manufactured by using traditional pressing or extrusion manufacturing methods, or by forging. The liquid-cooling heat dissipation plate proposed in the present invention possesses larger heat dissipating area which can improve heat dissipation efficiency by having a plurality of heat dissipation pillars formed thereon the inner surface of the heat dissipation component. When two heat dissipation components are engaged and form a liquid-cooling heat dissipation plate, these heat dissipation pillars are distributed within the liquid flow chamber of the liquid-cooling heat dissipation plate. Thus, when the outer surface of the liquid-cooling heat dissipation plate is in contact with the heat source, the heat can be quickly conducted and dispersed to these heat dissipation pillars through the high thermal conductivity metal. Then, through these heat dissipation pillars, the heat is exchanged with the coolant flowing through these heat dissipation pillars and taken away quickly. Comparing with the typical liquid-cooling heat dissipation plates without heat dissipation pillars, the liquid-cooling heat dissipation plate provided in the present invention possesses a larger total heat dissipation area which is used to be in contact with the coolant and perform heat exchange because of the presence of the heat dissipation pillars in the liquid flow chamber, and therefore, it can significantly improve the heat dissipation efficiency. Besides, when two heat dissipation components are engaged to form the liquid-cooling heat dissipation plate, the heat dissipation pillars from the two heat dissipation components are in contact to each other, thereby serving as supports. Since these heat dissipation pillars serve as many supports in the liquid flow chamber, the liquid-cooling heat dissipation plate can therefore possess stronger resistance to external impact without being deformed and damaged. In addition, the disclosed liquid-cooling heat dissipation plate is made by using laser welding to homogeneously weld the joining within a small area, which can further strengthen the joining. As a result, the liquid-cooling heat dissipation plate of the present disclosure is less likely to be broken by external impact to cause coolant leakage. In summary, by comparing with the typical liquid-cooling heat dissipation plate used in lithium battery modules, the liquid-cooling heat dissipation plate disclosed in the present invention possesses higher heat dissipation efficiency, stronger resistance to deformation and damage, and higher safety while using in heat dissipation of lithium battery modules.

The liquid-cooling heat dissipation plate proposed in this invention used for lithium battery modules is made by directly molding a piece of metal sheet or block into a heat dissipation component, which comprises a plurality of heat dissipation pillars, through a one-piece molding process. Then two heat dissipation components are engaged to each other in such a way that the plurality of heat dissipation pillars from each heat dissipation component are in contact to each other (or touch each other) to form a liquid-cooling heat dissipation plate with many heat dissipation pillars distributed in the liquid flow chamber. The plurality of heat dissipation pillars are distributed on the inner surfaces of both sides of the liquid flow chamber and immersed by the cooling liquid (or coolant) to accelerate heat exchange and dissipation. The design of the heat dissipation pillars makes the liquid-cooling heat dissipation plate of the present disclosure possess a larger heat exchange area on both sides of the plate. When the heat sources are in contact with the surfaces of the liquid-cooling heat dissipation plate, the heat can be rapidly conducted and transferred to the heat dissipation pillars immersing in the coolant and swiftly taken away by the coolant to achieve rapid heat dissipation. Comparing with a typical hollow type liquid-cooling heat dissipation plate which has no heat dissipation pillars, the liquid-cooling heat dissipation plate of the present disclosure has a larger total heat dissipation area, and the heat dissipation area of the heat dissipation pillars is directly immersing in the cooling liquid, resulting in higher the heat dissipation efficiency.

According to the invention, a liquid-cooling heat dissipation plate which can be used for a lithium battery module is provided comprising at least two heat dissipation components, at least one liquid inlet and at least one liquid outlet. The heat dissipation component includes a rectangular plate body including an inner surface and an opposite outer surface. A U-shaped frame with appropriate height is provided at three sides of the edge of the inner surface. The inner surface has a plurality of heat dissipation pillars protruding therefrom. The height of the middle frame of the U-shaped frame is about twice the height of the two side frames of the U-shaped frame. The heat dissipation pillars has a height not higher than the height at the two side frames of the U-shaped frame. The disclosed liquid-cooling heat dissipation plate which can be used for lithium battery modules is made of two heat dissipation components that are engaged to each other with their inner surfaces facing each other and then welded, wherein the middle frame of the U-shaped frame of one of the heat dissipation components is engaged with the opening of the U-shaped frame of the other heat dissipation component to form the liquid-cooling heat dissipation plate with a liquid flow chamber. The entire structure of the heat dissipation component including the heat dissipation pillars and the U-shaped frame is made as a unique piece from the same metal sheet (or metal body). The liquid-cooling heat dissipation plate has at least one liquid inlet connecting with an external pipeline for a cooling liquid to flow into the liquid flow chamber, and has at least one liquid outlet connecting with another external pipeline for the cooling liquid to flow out. The liquid inlet and the liquid outlet are arranged on the same side or different sides of the liquid-cooling heat dissipation plate.

In one embodiment of the invention, the entire structure of the heat dissipation component including the heat dissipation pillars and the U-shaped frame is made as a unique piece from the same metal sheet (or metal body), wherein the metal sheet is magnesium alloy or aluminum alloy.

In one embodiment of the invention, the liquid-cooling heat dissipation plate is composed of two heat dissipation components, which are engaged to each other with their inner surfaces facing each other and then welded by laser welding.

In one embodiment of the invention, the liquid flow chamber further includes at least one flow guide.

In one embodiment of the invention, the liquid-cooling heat dissipation plate is used for heat dissipation of plate-shaped or sheet-shaped lithium battery modules, and the liquid-cooling heat dissipation plate is plate-shaped with 250 mm - 600 mm in length, 150 mm - 450 mm in width, and 10 mm - 30 mm in thickness.

In one embodiment of the invention, the cooling liquid is water.

In one embodiment of the invention, a lithium battery module is proposed, which includes a plurality of liquid-cooling heat dissipation plates as described in any of the above-mentioned embodiments, and a plurality of sheet-shaped or plate-shaped lithium batteries, wherein the liquid-cooling heat dissipation plates are alternatively disposed between the plurality of sheet-shaped or plate-shaped lithium batteries.

In one embodiment of the invention, the lithium battery module provided in the present disclosure includes at least one sheet-shaped or plate-shaped lithium battery between two adjacent liquid-cooling heat dissipation plates.

In one embodiment of the invention, the lithium battery module of the present disclosure includes two sheet-shaped or plate-shaped lithium batteries between two adjacent liquid-cooling heat dissipation plates.

Further scope of applicability of the present application will become more apparent from the detailed description given hereinafter. However, it should be understood that the detailed description and specific examples, while indicating exemplary embodiments of the disclosure, are given by way of illustration only, the scope of the invention being defined by the appended claims.

### BRIEF DESCRIPTION OF THE DRAWINGS

The present invention will become more fully understood from the detailed description given herein below and the accompanying drawings which are given by way of illustration only, and thus are not limitative of the present invention, the scope of which is defined by the appended claims, and wherein:
FIG. 1 shows schematically an embodiment of the structure of the liquid-cooling heat dissipation plate and a heat dissipation component in accordance with the present invention;
FIG. 2 shows schematically a top view of the heat dissipation component in the first implementation of the present invention;
FIG. 3 shows schematically a transparent top view of the liquid-cooling heat dissipation plate in the first implementation of the present invention, which is made from the heat dissipation component of FIG. 2;
FIG. 4 shows schematically a cross-sectional view of the liquid-cooling heat dissipation plate of FIG. 3, the first implementation of the present invention;
FIG. 5 shows schematically a top view of the heat dissipation component in the second implementation of the present invention;
FIG. 6 shows schematically a transparent top view of the liquid-cooling heat dissipation plate in the second implementation of the present invention, which is made from the heat dissipation component of FIG. 5;
FIG. 7 shows schematically a top view of the heat dissipation component in the third implementation of the present invention;
FIG. 8 shows schematically a transparent top view of the liquid-cooling heat dissipation plate in the third implementation of the present invention, which is made from the heat dissipation component of FIG. 7;
FIG. 9 shows a perspective view and top view of an embodiment of a flow guide used in the liquid-cooling heat dissipation plate of the present invention;
FIG. 10 shows schematically a top view of the heat dissipation component in the fourth implementation of the present invention;
FIG. 11 shows schematically a transparent top view of the liquid-cooling heat dissipation plate in the fourth implementation of the present invention, which is made from the heat dissipation component of FIG. 10;
FIG. 12 shows schematically an embodiment of a lithium battery module in accordance with an embodiment of the present invention, which includes the liquid-cooling heat dissipation plate of the present invention; and
FIG. 13 shows schematically another embodiment of a lithium battery module in accordance with an embodiment of the present invention, which includes the liquid-cooling heat dissipation plate of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. In the following description and/or scope of patent application, the technical terms used should be interpreted with the usual meanings commonly used by those skilled in the art. For ease of understanding, the same elements in the following embodiments are referred to as the same symbols. In this specification, the term "about" usually means that the actual value is within plus or minus 10%, 5%, 1% or 0.5% of a specific value or range. The term "about" herein means also that the actual value falls within an acceptable standard error of the mean, as considered by one of ordinary skill in the art to which this invention pertains. Except for the examples, or unless otherwise expressly stated, it should be understood that ranges, amounts, values and percentages used herein are modified by "about". Therefore, unless otherwise stated, the numerical values or parameters disclosed in this specification and the appended patent claims are approximate numerical values and may be changed as required.

In the description of the present invention, it should be understood that the terms "length", "width", "thickness", "up", "down", "front", "back", "left", "right", "vertical", "horizontal", "top", "bottom", "inside", "outside", "axial", "radial", "circumferential" and the other indicated orientation or position relationship is based on the orientation or position relationship shown in the drawings, only for the convenience of describing the present invention and simplifying the description, not to indicate or imply that the device or element referred to must have a particular orientation, constructed and operated in a particular orientation, so it cannot be understood as a limitation of the present invention.

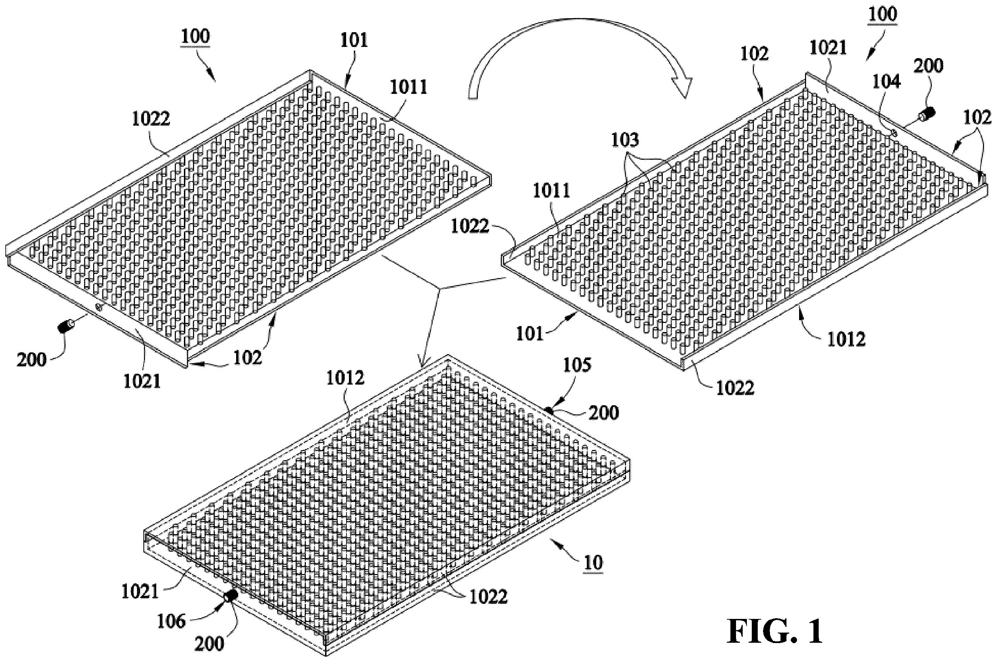

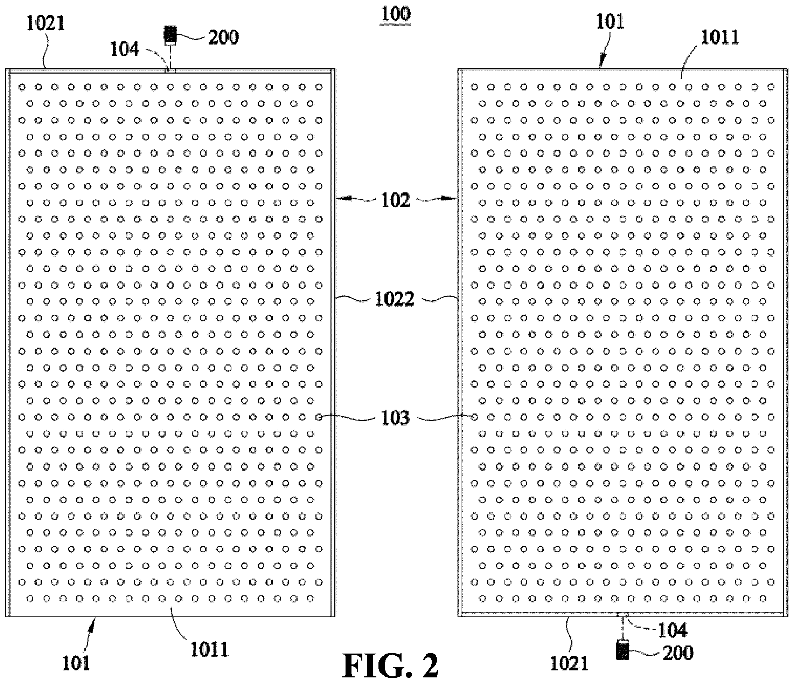

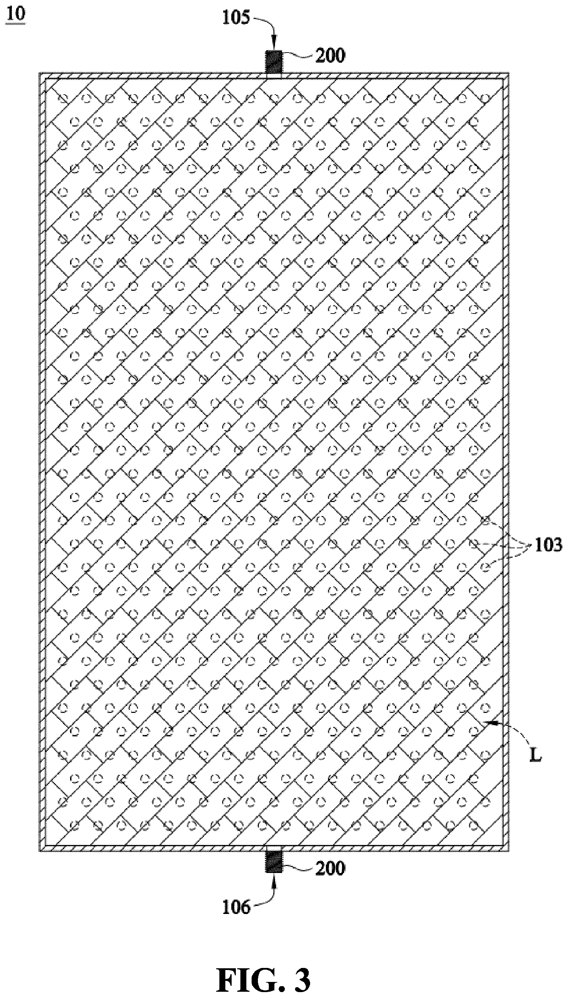

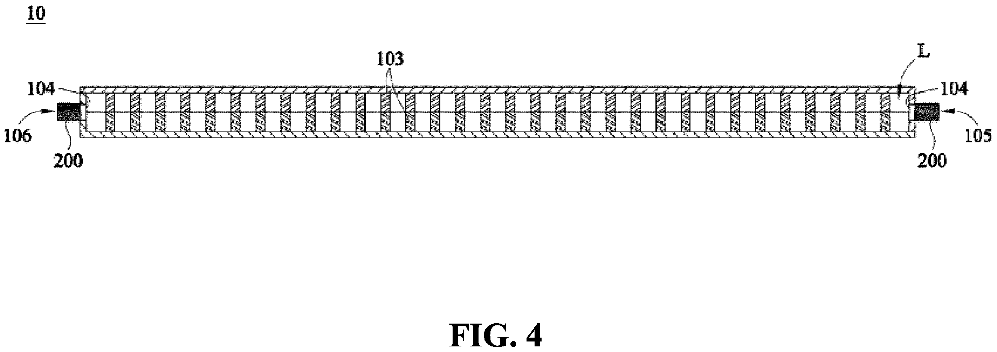

Referring to FIGs. 1 to 4, an embodiment of a liquid-cooling heat dissipation plate 10 used for lithium battery modules in accordance with the present invention includes two heat dissipation components 100 having identical structures. The heat dissipation component 100 includes a rectangular plate body 101 including an inner surface 1011 and an opposite outer surface 1012, a U-shaped frame 102 with appropriate height disposing at three sides of the edge of the inner surface 1011. The inner surface 1011 has a plurality of heat dissipation pillars 103 protruding therefrom. The height of the middle frame 1021 of the U-shaped frame 102 is about twice the height of the two side frames 1022 of the U-shaped frame 102. The heat dissipation pillars 103 has a height not higher than the height of the two side frames 1022 of the U-shaped frame 102. In this embodiment, the disclosed liquid-cooling heat dissipation plate 10 is made of two heat dissipation components 100 having identical structures, that are engaged to each other with their inner surfaces 1011 facing each other and then welded, wherein the middle frame 1021 of the U-shaped frame 102 in one of the heat dissipation components 100 is engaged with the opening of the U-shaped frame 102 in the other heat dissipation component 100 to form the liquid-cooling heat dissipation plate 10 with a liquid flow chamber L. Wherein, the entire structure of the heat dissipation component 100 including the heat dissipation pillars 103 and the U-shaped frame 102 is made as a unique piece from the same metal sheet or metal block (such as magnesium alloy or aluminum alloy). The liquid-cooling heat dissipation plate 10 of the present invention further includes at least one liquid inlet 105 connecting with an external pipeline for a cooling liquid to flow into the liquid flow chamber L, and at least one liquid outlet 106 connecting with another external pipeline for the cooling liquid to flow out therefrom. The liquid inlet 105 and the liquid outlet 106 are arranged on the same side or different sides of the liquid-cooling heat dissipation plate 10. When the cooling liquid flows into the liquid flow chamber L, it flows through the plurality of heat dissipation pillars 103 distributed in the liquid flow chamber L and undergoes heat exchange. Then, after absorbing the heat, the temperature of the cooling liquid rises and then flows out of the liquid flow chamber L from the liquid outlet 106. Through the external pipeline connected with the liquid outlet 106, the cooling liquid is transported to the heat dissipation device to dissipate the heat, and by thus, the temperature of the cooling liquid is reduced. After reducing the temperature, the cooling liquid is then re-transported to flow into the liquid flow chamber L through the liquid inlet 105 again. By the circulation of the cooling liquid, the liquid-cooling heat dissipation plate 10 of the present disclosure can achieve its excellent heat dissipation efficiency.

To further explain, please refer to FIGs. 1 to 3, in this embodiment of the present invention, the liquid inlet 105 and the liquid outlet 106 can be provided by presetting at least one joint opening 104 on the middle frame 1011 of the U-shaped frame 102 when manufacturing the heat dissipation component 100. Then, two heat dissipation components 100 are engaged to each other and welded to form the liquid-cooling heat dissipation plate 10. After then, the joint openings 104 on the heat dissipation component 100 serve as the liquid inlet 105 and the liquid outlet 106 of the liquid-cooling heat dissipation plate 10 to connect with external pipelines through a plurality of connectors 200. In this embodiment of the present disclosure, the liquid-cooling heat dissipation plate 10 is made of two structurally identical heat dissipation components 100 that are engaged to each other and then welded. The number of the joint opening 104 on each heat dissipation component 100 is one, and its position is located at the middle of the middle frame 1021. Therefore, when the two heat dissipation components 100 are engaged to each other to form the liquid-cooling heat dissipation plate 10, the joint opening 104 of one of the heat dissipation components 100 serves as the liquid inlet 105 while the joint opening 104 of the other heat dissipation component 100 serves as the liquid outlet 106. Thus, the liquid inlet 105 and liquid outlet 106 are located on opposite sides (or different sides) of the liquid-cooling heat dissipation plate 10.

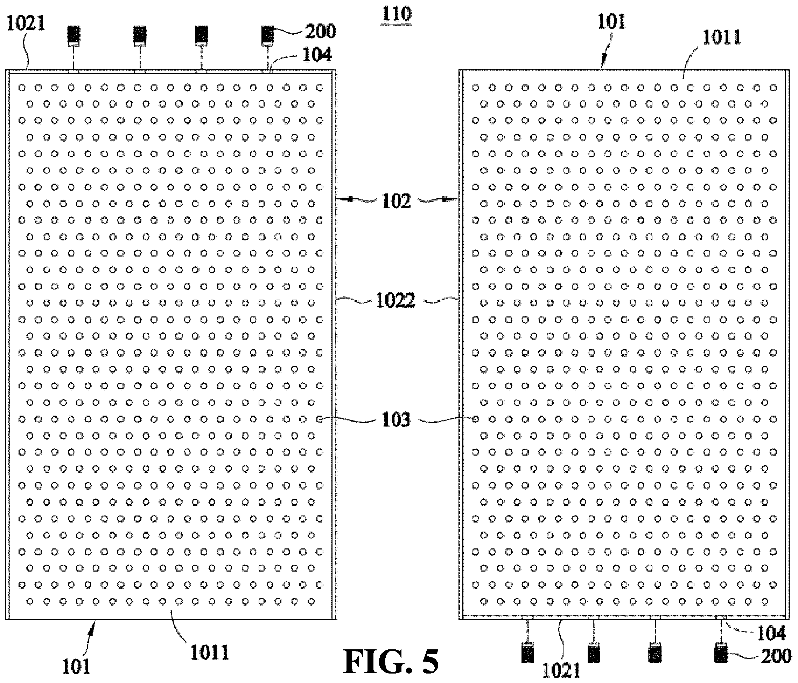

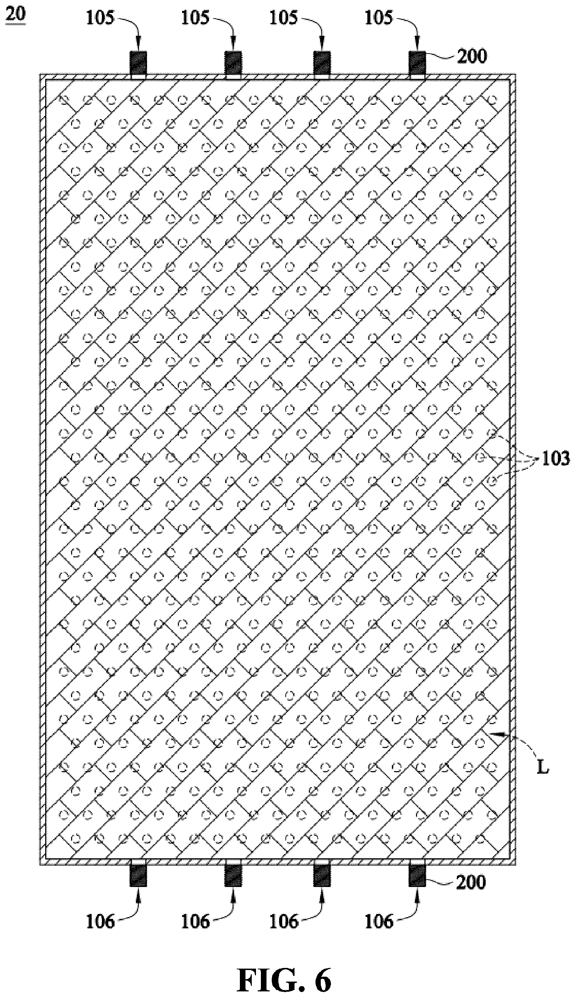

Referring to FIGs. 5 and 6, the second implementation of the present invention. In this embodiment, the liquid-cooling heat dissipation plate 20 includes a plurality of liquid inlets 105 and a plurality of liquid outlets 106, and the liquid inlets 105 are disposed at the opposite side of the liquid outlets 106. Referring to FIG. 5, the liquid-cooling heat dissipation plate 20 disclosed in the second implementation of the present invention is made of two structurally identical heat dissipation component 110 that are engaged to each other. The heat dissipation component 110 includes a plurality of joint openings 104 on the middle frame 1021 of the U-shaped frame 102. In this embodiment, the number of the joint opening 104 is four, but not limited to. These joint openings 104 are equally distributed on the middle frame 1021. Therefore, when the two heat dissipation components 110 are engaged to each other to form the liquid-cooling heat dissipation plate 20, the four joint openings 104 from one of the heat dissipation components 110 can serve as four liquid inlets 105 using for connecting with four external pipelines through connectors 200 and allowing the cooling liquid to flow into the liquid flow chamber L of the liquid-cooling heat dissipation plate 20. While the four joint opening 104 from the other one of the heat dissipation components 110 can serve as four liquid outlets 106 using for connecting with another four external pipelines through connectors 200 and allowing the cooling liquid that has flowed through the liquid flow chamber L to flow out therefrom. The cooling liquid is then directed by the external pipelines to dissipate heat and then re-transported to flow into the liquid flow chamber L through the liquid inlets 105 again. In this embodiment, the liquid-cooling heat dissipation plate 20 includes four liquid inlets 105 and four liquid outlets 106 arranged on the opposite side, and certainly, comparing with the liquid-cooling heat dissipation plate 10 having only one liquid inlet 105 and one liquid outlet 106, the volume of the cooling liquid flowed into and out of the liquid flow chamber L per time unit is larger, and the liquid-cooling heat dissipation efficiency is relatively improved.

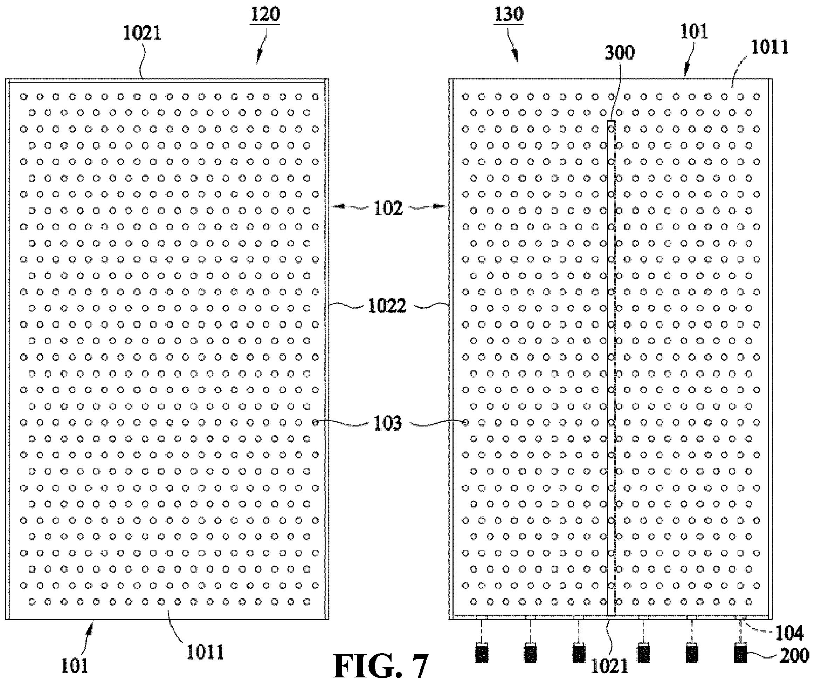

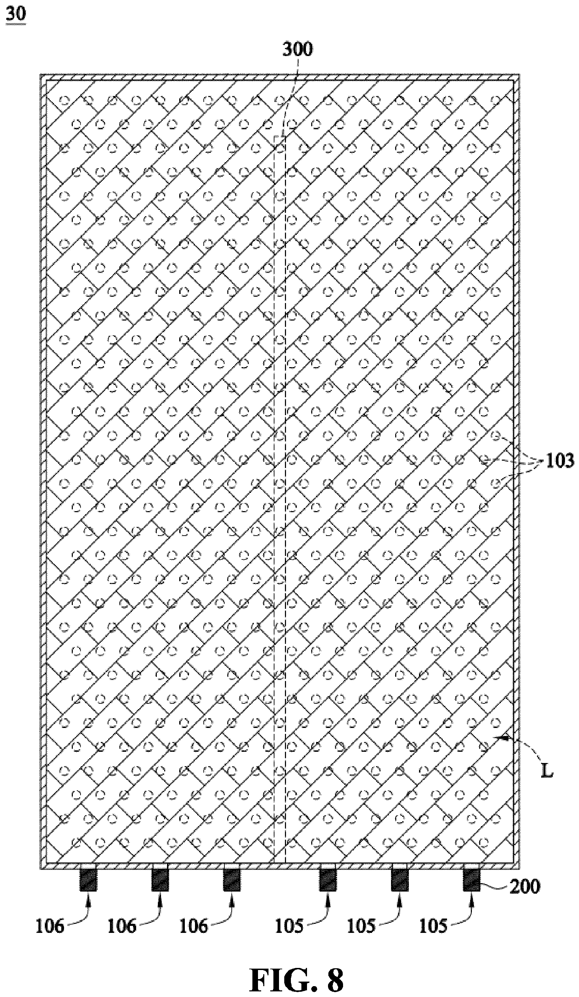

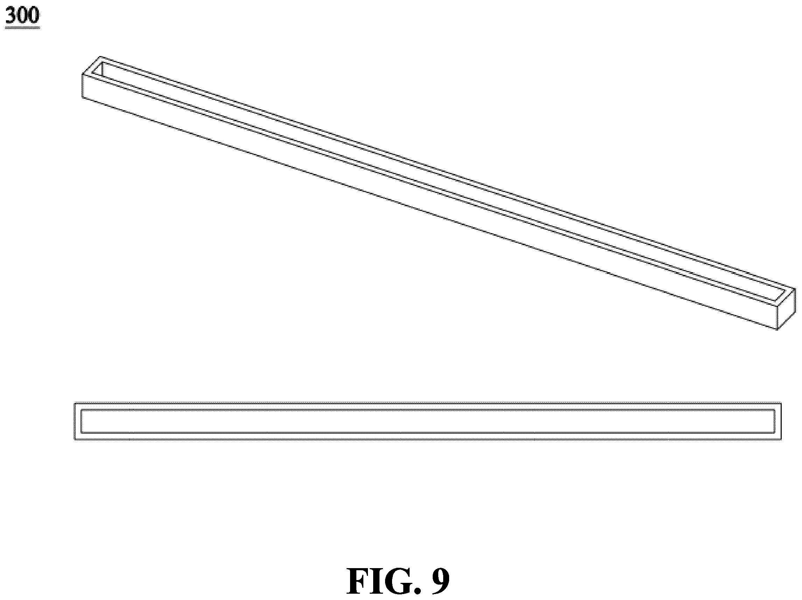

Referring to FIGs. 7 - 9, the third implementation of the present invention. In this embodiment, the liquid-cooling heat dissipation plate 30 includes a plurality of liquid inlets 105 and a plurality of liquid outlets 106, and the liquid inlets 105 are disposed at the same side of the liquid outlets 106. Besides, a flow guide 300 with long sheet shape is disposed in the liquid flow chamber L of the liquid-cooling heat dissipation plate 30. The flow guide 300 is disposed in between the plurality of liquid inlets 105 and the plurality of liquid outlets 106 in order to direct the cooling liquid injected from the liquid inlets 105 to flow to a longer distance. This prevents the cooling liquid that has just been injected into the liquid flow chamber L from being directly discharged from the liquid outlet 106 to reduce the heat dissipation efficiency. It should be noted that the shape or the quantity of the flow guide 300 can be varied in accordance with the application needs. For example, the quantity of the flow guide 300 disposed in the liquid flow chamber L can be one, two, three, four, five or six. Referring to FIG. 7, in the third implementation of the present invention, the liquid-cooling heat dissipation plate 30 is made of two structurally different heat dissipation components 120 and 130 engaging to each other and welded. Wherein, one heat dissipation component 120 has no joint opening 104 on the middle frame 1021 of the U-shaped frame 102, while contrarily, the other one heat dissipation component 130 includes a plurality of joint openings 104 on the middle frame 1021 of the U-shaped frame 102. In this embodiment, the number of the joint opening 104 is six, but not limited to. These joint openings 104 are equally distributed on the middle frame 1021. When these two heat dissipation components 120, 130 are engaged to each other and welded to form the liquid-cooling heat dissipation plate 30, among the six joint openings 104, three adjacent ones on one side of the middle frame 1021 can serve as liquid inlets 105, while the other three adjacent joint opening 103 on the other side of the middle frame 1021 serve as liquid outlets 106. Furthermore, a flow guide 300 with long sheet shape is disposed in between the three liquid inlets 105 and the three liquid outlets 106. As shown in FIG. 7, the flow guide 300 can direct the flow direction of the cooling liquid, injected from the three liquid inlets 105, in the liquid flow chamber L and prevent occurring of turbulent flow. This allows the cooling liquid to flow smoothly through the liquid flow chamber L and to the liquid outlets 106. In this embodiment, the flow guide 300 is a long O-shaped sheet, as shown in FIG. 9, so that it can just fit onto a plurality of heat dissipation pillars 103 and be fixed in the liquid flow chamber L.

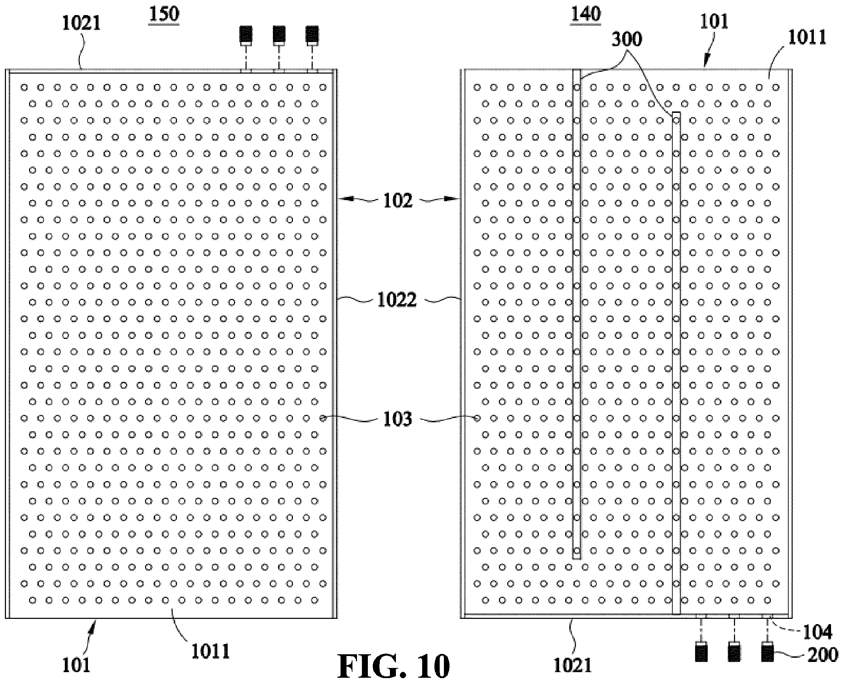

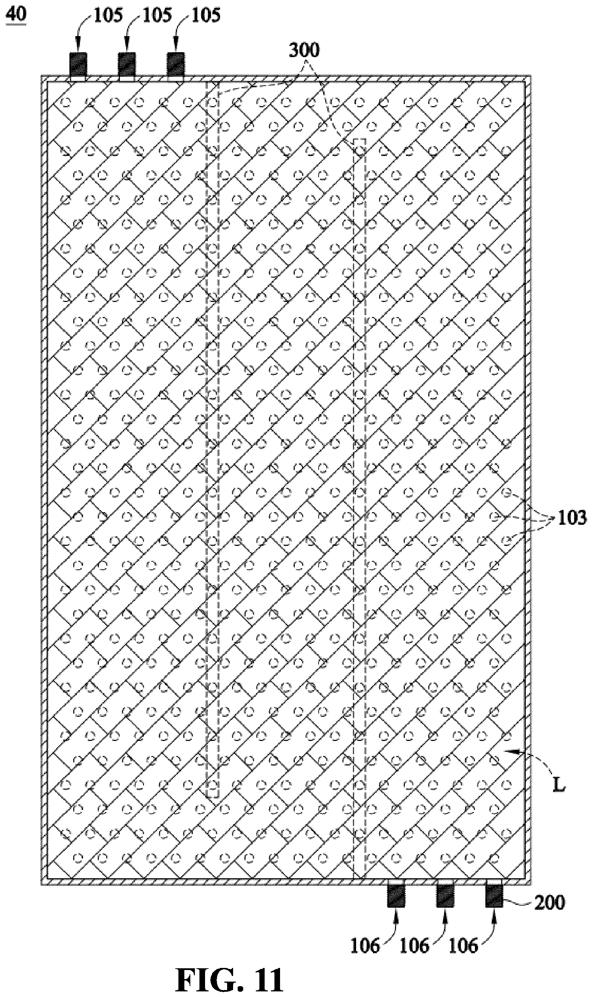

Referring to FIGs. 10 and 11, the fourth implementation of the present invention. In this embodiment, the liquid-cooling heat dissipation plate 40 includes a plurality of liquid inlets 105 and a plurality of liquid outlets 106, and the liquid inlets 105 are disposed at the opposite side of the liquid outlets 106. The liquid inlets 105 and the liquid outlets 106 are approximately disposed at diagonal positions of the liquid-cooling heat dissipation plate 40. In this embodiment, the liquid-cooling heat dissipation plate 40 includes a plurality of flow guides 300 with long sheet shape disposed in the liquid flow chamber L. These flow guides 300 are equally distributed and disposed in between the plurality of liquid inlets 105 and the plurality of liquid outlets 106. Referring to FIG. 10, in the fourth implementation of the present disclosure, the liquid-cooling heat dissipation plate 40 is made of two structurally different heat dissipation components 140 and 150 engaging to each other and welded. Wherein, one heat dissipation component 140 includes a plurality of joint openings 104 on the left-half side of the middle frame 1021 of the U-shaped frame 102, while contrarily, the other one heat dissipation component 150 includes a plurality of joint openings 104 on the right-half side of the middle frame 1021 of the U-shaped frame 102. As a consequence, when these two heat dissipation component 140, 150 are engaged to each other and welded to form the liquid-cooling heat dissipation plate 40, the joint openings 104 from both heat dissipation components 140, 150 are approximately disposed at diagonal positions of the liquid-cooling heat dissipation plate 40, as shown in FIG. 11. In this embodiment, two flow guides 300 are provided in the liquid flow chamber L in order to direct the flow direction of cooling liquid to flow through a longer flowing path and increase the retention time of the cooling liquid staying in the liquid flow chamber L, and by thus, to increase the heat dissipation efficiency.

It should be understood that the positions and quantities of the joint openings 104 and the flow guides 300 in the above embodiments can be varied with the application situations. The above-mentioned implementations are only illustrative explanations of the present invention and should not be regarded as limitations on the liquid-cooling heat dissipation plate as claimed in the appended claims. For example, the liquid inlet 105 and the liquid outlet 106 can be disposed at the same side or different sides of the liquid-cooling heat dissipation plate. The quantity of the liquid inlet 105 and the liquid outlet 106 can be one, two, three, or four. The plurality of liquid inlets 105 and the plurality of the liquid outlets 106 can be located at the same side or different sides, or partially at the same side. In addition, the joint openings 104 can be pre-set at the middle frame 1021 of the U-shaped frame 102 of the heat dissipation component (100, 110, 130, 140, 150), which can serve as liquid inlets 105 or liquid outlets 106 of the liquid-cooling heat dissipation plate, or alternatively, two heat dissipation components 120 having no joint opening 104 can firstly engaged and welded, and then to make the joint opening 104 according to application needs to form on the liquid-cooling heat dissipation plate.

In one embodiment, the liquid-cooling heat dissipation plate (10, 20, 30, 40) of the present disclosure, wherein the entire structure of the heat dissipation component (100, 110, 120 , 130, 140, 150) including the heat dissipation pillars 103 and the U-shaped frame 102 is made as a unique piece from the same metal sheet (or metal block) wherein the metal sheet is magnesium alloy or aluminum alloy.

In one embodiment, the liquid-cooling heat dissipation plate of the present invention is formed by laser welding after the two heat dissipation components are engaged to each other with their inner surfaces 1011 facing each other. It should be understood that laser welding is a process in which a focused laser beam is used to quickly weld the joining between two homogeneous or heterogeneous objects. The high-energy laser is used to focus on a small area of the joining between the two objects to quickly weld the two joining objects, which can reduce the thermal impact on the welded objects. Therefore, in order to avoid using traditional welding, which may affect the physical properties such as thermal conductivity and thermal diffusion coefficient due to the large welding high temperature area of the heat dissipation component, laser welding is used to weld the heat dissipation components. In addition, laser welding is different from traditional welding, it can weld homogeneous objects without the need of using heterogeneous solder materials, and by thus, the physical properties such as rigidity, thermal conductivity and thermal diffusion coefficient of the welded object can be retained. Consequently, the liquid-cooling heat dissipation plate of the present invention can possess better performance than other similar products used for the heat dissipation of lithium battery modules. For example, the stronger rigidity and homogeneous welding make the liquid-cooling heat dissipation plate of the present disclosure possessing higher safety, and less likely to deform or crack at the welding joint when subjected to external impact.

In one embodiment, the liquid-cooling heat dissipation plate (10, 20, 30, 40, taking 10 as exemplary example) of the present invention is used for heat dissipation of plate-shaped or sheet-shaped lithium battery modules. Thus, in order to fit the size and shape of the lithium battery modules and obtain a better heat dissipation efficiency, the liquid-cooling heat dissipation plate is designed as plate-shaped with 250 mm - 600 mm in length, 150 mm - 450 mm in width, and 10 mm - 30 mm in thickness.

In one embodiment, the cooling liquid used in the liquid-cooling heat dissipation plate (10, 20, 30, 40) of the present invention is water, especially softened water to avoid scale formation after being using for a long period of time. In other embodiments, an antifreeze agent (such as ethylene glycol) can be selectively added to the cooling liquid depending on application conditions to prevent the cooling liquid from solidifying and losing its function when the ambient temperature is below freezing point.

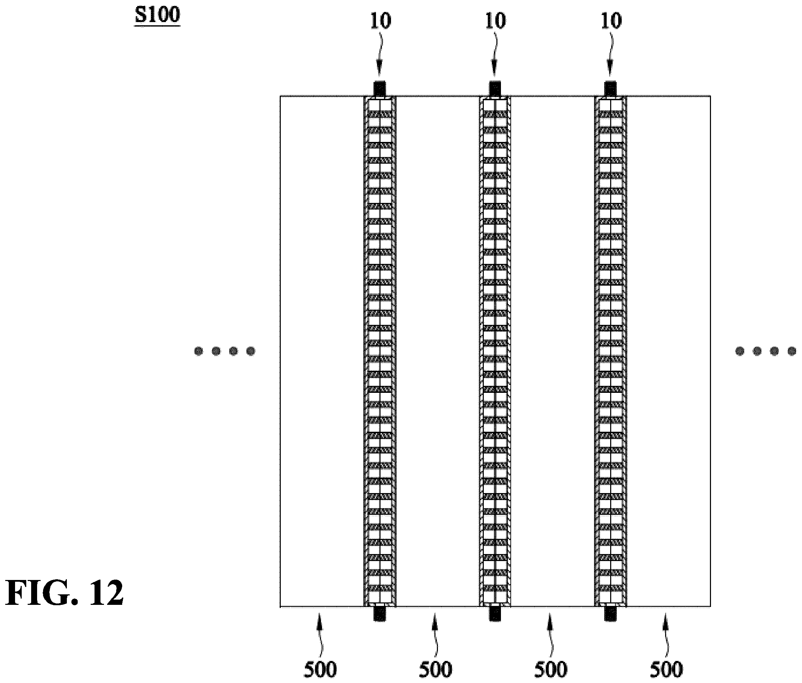

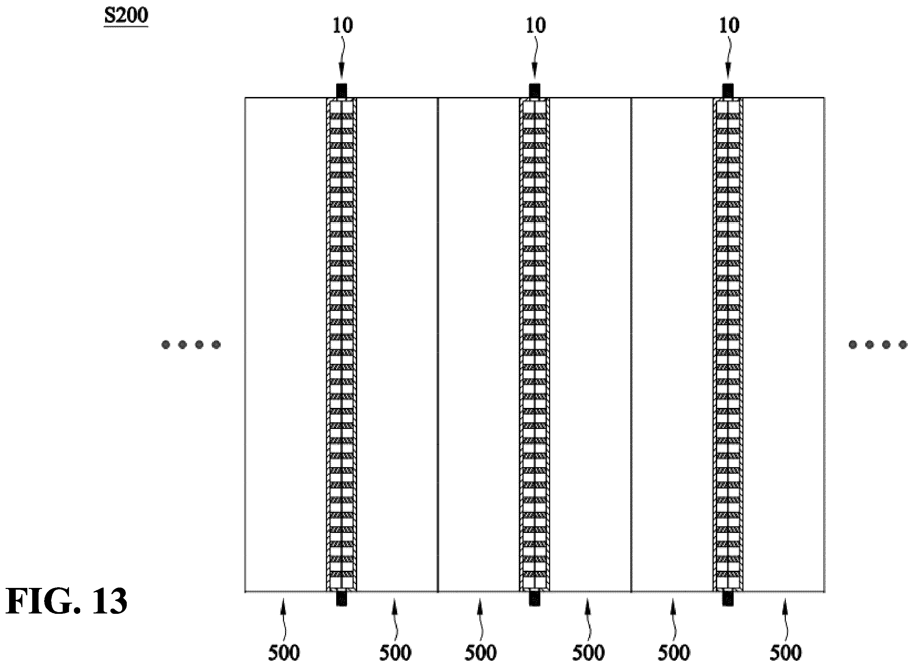

Referring to FIGs. 12 and 13, the schematic diagrams of a lithium battery module (S100, S200) according to an embodiment of the present invention, which includes a liquid-cooling heat dissipation plate according to one of the aforementioned embodiments of the present invention. (Taking the liquid-cooling heat dissipation plate 10 as an example). In one embodiment of the present invention, a lithium battery module (S100, S200) is provided, which includes a plurality of liquid-cooling heat dissipation plates 10 as described in any of the above-mentioned embodiments, and a plurality of sheet-shaped or plate-shaped lithium batteries 500, wherein the liquid-cooling heat dissipation plates 10 are alternatively disposed between the plurality of sheet-shaped or plate-shaped lithium batteries 500. In one embodiment, the lithium battery module (S100, S200) provided in the present invention includes at least one sheet-shaped or plate-shaped lithium battery 500 between two adjacent liquid-cooling heat dissipation plates 10.

In one embodiment, the lithium battery module (S200) provided in the present invention includes two sheet-shaped or plate-shaped lithium batteries 500 between two adjacent liquid-cooling heat dissipation plates 10. As mentioned above, the liquid-cooling heat dissipation plate (10, 20, 30, 40) of the present disclosure invention includes a plurality of heat dissipation pillars 103 in the liquid flow chamber L, and possesses a significantly larger heat dissipation area comparing with other type of liquid-cooling heat dissipation plate. Therefore, the liquid-cooling heat dissipation plate of the present invention can exchange heat more efficiently with the cooling liquid. In addition, the liquid-cooling heat dissipation plate (10, 20, 30, 40) of the present invention can be designed in accordance with the application condition to have a plurality of liquid inlets 105 and a plurality of liquid outlets 106, which can increase the volume flow rate of the cooling liquid, and resulting in faster heat dissipation efficiency. Therefore, even under the condition having two sheet-shaped or plate-shaped lithium batteries are stacked between two adjacent liquid-cooling heat dissipation plate 10, the temperature of the lithium battery module S200 can still be maintained at the adequate operating temperature, and thus the weight of the overall lithium battery module 500 is lighter than the one with other type of liquid-cooling heat dissipation plate.

Certainly, each of the above-mentioned embodiments is only for illustration and not limiting the scope of the present invention, which is defined by the appended claims.

It is worth mentioning that the liquid-cooling heat dissipation plate disclosed in this description used for lithium battery modules, includes the heat dissipation component which is made as a unique piece from the same metal sheet by one-piece manufacturing method. The liquid-cooling heat dissipation plate made by this way not only possesses larger total heat dissipation area, which can greatly improve the thermal conductivity and thermal diffusion efficiency, but also have high rigidity and anti-deformation ability. Additionally, the properties, such as the heat dissipation efficiency, durability, and reliability of the liquid-cooling heat dissipation plate of the present disclosure are also better than that of the general liquid-cooling heat dissipation plate. In summary, the liquid-cooling heat dissipation plate of the present invention used for lithium battery modules has the following advantages:
1. The liquid-cooling heat dissipation plate includes a plurality of heat dissipation pillars within the liquid flow chamber, leading to higher rigidity. This allows a thinner liquid-cooling heat dissipation plate to be made without being easy to break, and has higher safety.
2. The liquid-cooling heat dissipation plate has a significantly larger heat dissipation and heat exchange area, and thus the heat dissipation efficiency is better.
3. Homogeneous welding is carried out by laser welding. The strength of the welding joint is stronger than that of traditional welding, and it is not easy to break and is safer.
4. Not only the heat dissipation area is much larger than that of a general liquid-cooling heat dissipation plate with flow channels, but also, due to the existence and distribution of heat dissipation pillars, the disturbance and mixing of the cooling liquid can be increased. This makes the temperature distribution of the cooling liquid more uniform than that of a liquid-cooling heat dissipation plate with flow channels, and the temperature difference of the entire heat dissipation device is also smaller.

In one embodiment of the integrated vapor chamber according to this invention, an air pressure of the working space can be less than 1x10⁻³ torr, 1x10⁻⁴ torr, or 1x10⁻⁵ torr.

With respect to the above description then, it is to be realized that the optimum dimensional relationships for the parts of the invention, to include variations in size, materials, shape, form, function and manner of operation, assembly and use, are deemed readily apparent and obvious to one skilled in the art. The scope of the invention is defined by the appended claims.

## Claims

1. A liquid-cooling heat dissipation plate (10, 20, 30, 40) for lithium battery modules, comprising:
two heat dissipation components (100, 110, 120, 130, 140, 150), including:
a rectangular plate body (101), including an inner surface (1011) and an opposite outer surface (1012);
a U-shaped frame (102) with appropriate height being provided at three sides of the edge of the inner surface (1011);
a plurality of heat dissipation pillars (103) being disposed on the inner surface (1011) and protruding therefrom; wherein the U-shaped frame (102) has twice the height at the middle frame (1021) than that of the two side frames (1022), and the heat dissipation pillars (103) have the height not higher than that of the two side frames (1022);
wherein the liquid-cooling heat dissipation plate (10, 20, 30, 40) is made of two heat dissipation components (100, 110, 120, 130, 140, 150) engaging to each other with their inner faces (1011) facing each other and the middle frame (1021) of the U-shaped frame (102) of one heat dissipation component (100, 110, 120, 130, 140, 150) engaging with the opening of the U-shaped frame (102) of the other heat dissipation component (100, 110, 120, 130, 140, 150) and then welded to form the liquid-cooling heat dissipation plate (10) with a liquid flow chamber (L);
wherein the heat dissipation component (100, 110, 120, 130, 140, 150) including the heat dissipation pillars (103) and the U-shaped frame (102) are made as a unique piece from the same metal sheet or metal block;
at least one liquid inlet (105), used for connecting with an external pipeline for a cooling liquid to flow into the liquid flow chamber (L);
at least one liquid outlet (106), used for connecting with another external pipeline for the cooling liquid to flow out of the liquid flow chamber (L);
wherein the liquid inlet (105) and the liquid outlet (106) are disposed on the same side or different sides of the liquid-cooling heat dissipation plate (10).

2. The liquid-cooling heat dissipation plate (10, 20, 30, 40) of claim 1, wherein the heat dissipation component (100, 110, 120, 130, 140, 150) including the heat dissipation pillars (103) and the U-shaped frame (102) are made as a unique piece from the same metal sheet or metal block, and the metal sheet or metal block is magnesium alloy or aluminum alloy.

3. The liquid-cooling heat dissipation plate (10, 20, 30, 40) of claim 1, wherein the liquid-cooling heat dissipation plate (10, 20, 30, 40) is made of two heat dissipation components (100, 110, 120, 130, 140, 150) engaging to each other with their inner faces (1011) facing each other and then welded by laser welding.

4. The liquid-cooling heat dissipation plate (10, 20, 30, 40) of claim 1, wherein the liquid flow chamber (L) includes at least one flow guide (300).

5. The liquid-cooling heat dissipation plate (10, 20, 30, 40) of claim 1, wherein the liquid-cooling heat dissipation plate (10, 20, 30, 40) is plate-shaped with 250 mm - 600 mm in length, 150 mm - 450 mm in width, and 10 mm - 30 mm in thickness.

6. The liquid-cooling heat dissipation plate (10, 20, 30, 40) of claim 1, wherein the cooling liquid is water.

7. A lithium battery module (S100, S200), comprising a plurality of the liquid-cooling heat dissipation plates (10, 20, 30, 40) of claim 1 and a plurality of sheet-shaped or plate-shaped lithium batteries (500), wherein the liquid-cooling heat dissipation plates (10, 20, 30, 40) are alternatively disposed between the plurality of sheet-shaped or plate-shaped lithium batteries (500).

8. The lithium battery module (S100, S200) of claim 7, comprising at least one sheet-shaped or plate-shaped lithium battery (500) in between two adjacent liquid-cooling heat dissipation plates (10, 20, 30, 40).

9. The lithium battery module (S100, S200) of claim 7, comprising two sheet-shaped or plate-shaped lithium batteries (500) in between two adjacent liquid-cooling heat dissipation plates (10, 20, 30, 40).

## Patentansprüche

1. Wärmeableitungsplatte zur Flüssigkeitskühlung (10, 20, 30, 40) für Lithiumbatteriemodule, umfassend:
zwei Wärmeableitungskomponenten (100, 110, 120, 130, 140, 150), einschließlich:
einen rechteckigen Plattenkörper (101) mit einer Innenfläche (1011) und einer gegenüberliegenden Außenfläche (1012);
einen U-förmigen Rahmen (102) mit geeigneter Höhe, der an drei Seiten des Randes der Innenfläche (1011) angeordnet ist;
einer Vielzahl von Wärmeableitungssäulen (103), die an der Innenfläche (1011) angeordnet sind und von dieser vorstehen; wobei der U-förmige Rahmen (102) am mittleren Rahmen (1021) die doppelte Höhe aufweist wie die beiden Seitenrahmen (1022), und die Wärmeableitungssäulen (103) eine Höhe aufweisen, die nicht größer ist als die der beiden Seitenrahmen (1022);
wobei die Wärmeableitungsplatte zur Flüssigkeitskühlung (10, 20, 30, 40) aus zwei Wärmeableitungskomponenten (100, 110, 120, 130, 140, 150) besteht, die mit ihren einander zugewandten Innenflächen (1011) ineinander greifen, und der mittlere Rahmen (1021) des U-förmigen Rahmens (102) einer Wärmeableitungskomponente (100, 110, 120, 130, 140, 150) in die Öffnung des U-förmigen Rahmens (102) der anderen Wärmeableitungskomponente (100, 110, 120, 130, 140, 150) eingreift und anschließend verschweißt wird, um die Wärmeableitungsplatte zur Flüssigkeitskühlung (10) mit einer Flüssigkeitsströmungskammer (L) zu bilden;
wobei die Wärmeableitungskomponente (100, 110, 120, 130, 140, 150), die die Wärmeableitungssäulen (103) und den U-förmigen Rahmen (102) umfasst, als ein einziges Stück aus demselben Blech oder Metallblock gebildet ist;
wenigstens einen Flüssigkeitseinlass (105), der zum Anschluss an eine externe Rohrleitung dient, damit eine Kühlflüssigkeit in die Flüssigkeitsströmungskammer (L) fließen kann;
wenigstens einen Flüssigkeitsauslass (106), der zum Anschluss an eine weitere externe Rohrleitung dient, damit die Kühlflüssigkeit aus der Flüssigkeitsströmungskammer (L) abfließen kann;
wobei der Flüssigkeitseinlass (105) und der Flüssigkeitsauslass (106) auf derselben Seite oder auf verschiedenen Seiten der Wärmeableitungsplatte zur Flüssigkeitskühlung (10) angeordnet sind.

2. Wärmeableitungsplatte zur Flüssigkeitskühlung (10, 20, 30, 40) nach Anspruch 1, wobei die Wärmeableitungskomponente (100, 110, 120, 130, 140, 150), einschließlich der Wärmeableitungssäulen (103) und des U-förmigen Rahmens (102), als ein einziges Stück aus demselben Blech oder Metallblock gebildet ist, und das Blech oder der Metallblock aus einer Magnesiumlegierung oder einer Aluminiumlegierung besteht.

3. Wärmeableitungsplatte zur Flüssigkeitskühlung (10, 20, 30, 40) nach Anspruch 1, wobei die Wärmeableitungsplatte zur Flüssigkeitskühlung (10, 20, 30, 40) aus zwei Wärmeableitungskomponenten (100, 110, 120, 130, 140, 150) besteht, die mit ihren einander zugewandten Innenflächen (1011) ineinandergreifen und anschließend mittels Laserschweißen verschweißt sind.

4. Wärmeableitungsplatte zur Flüssigkeitskühlung (10, 20, 30, 40) nach Anspruch 1, wobei die Flüssigkeitsströmungskammer (L) wenigstens eine Strömungsführung (300) umfasst.

5. Wärmeableitungsplatte zur Flüssigkeitskühlung (10, 20, 30, 40) nach Anspruch 1, wobei die Wärmeableitungsplatte zur Flüssigkeitskühlung (10, 20, 30, 40) plattenförmig ist und eine Länge von 250 mm - 600 mm Länge, 150 mm - 450 mm Breite und 10 mm - 30 mm Dicke aufweist.

6. Wärmeableitungsplatte zur Flüssigkeitskühlung (10, 20, 30, 40) nach Anspruch 1, wobei die Kühlflüssigkeit Wasser ist.

7. Lithiumbatteriemodul (S100, S200), umfassend eine Vielzahl der Wärmeableitungsplatten zur Flüssigkeitskühlung (10, 20, 30, 40) nach Anspruch 1 und eine Vielzahl von blatt- oder plattenförmigen Lithiumbatterien (500), wobei die Wärmeableitungsplatte zur Flüssigkeitskühlung (10, 20, 30, 40) abwechselnd zwischen der Vielzahl von blattförmigen oder plattenförmigen Lithiumbatterien (500) angeordnet sind.

8. Lithiumbatteriemodul (S100, S200) nach Anspruch 7, umfassend wenigstens eine blatt- oder plattenförmige Lithiumbatterie (500) zwischen zwei benachbarten Wärmeableitungsplatten zur Flüssigkeitskühlung (10, 20, 30, 40).

9. Lithiumbatteriemodul (S100, S200) nach Anspruch 7, umfassend zwei blatt- oder plattenförmige Lithiumbatterien (500) zwischen zwei benachbarten Wärmeableitungsplatten zur Flüssigkeitskühlung (10, 20, 30, 40).

## Revendications

1. Plaque de dissipation de chaleur à refroidissement par liquide (10, 20, 30, 40) pour modules de batterie au lithium, comprenant:
deux composants de dissipation de chaleur (100, 110, 120, 130, 140, 150), comprenant:
un corps de plaque rectangulaire (101), comprenant une surface intérieure (1011) et une surface extérieure opposée (1012);
un cadre en forme de U (102) d'une hauteur appropriée, prévu sur trois côtés du bord de la surface intérieure (1011);
une pluralité de montants de dissipation de chaleur (103) disposés sur la surface intérieure (1011) et faisant saillie à partir de celle-ci; dans lequel le cadre en forme de U (102) présente, au niveau du cadre central (1021), une hauteur deux fois supérieure à celle des deux cadres latéraux (1022), et les montants de dissipation de chaleur (103) ont une hauteur qui n'est pas supérieure à celle des deux cadres latéraux (1022);
dans lequel la plaque de dissipation de chaleur à refroidissement par liquide (10, 20, 30, 40) est constituée de deux composants de dissipation de chaleur (100, 110, 120, 130, 140, 150) s'emboîtant l'un dans l'autre, leurs faces intérieures (1011) étant tournées l'une vers l'autre, et le cadre central (1021) du cadre en forme de U (102) d'un composant de dissipation de chaleur (100, 110, 120, 130, 140, 150) s'engageant dans l'ouverture du cadre en forme de U (102) de l'autre composant de dissipation de chaleur (100, 110, 120, 130, 140, 150), puis soudés pour former la plaque de dissipation de chaleur à refroidissement par liquide (10) avec une chambre d'écoulement de liquide (L) ;
dans lequel le composant de dissipation de chaleur (100, 110, 120, 130, 140, 150) comprenant les montants de dissipation de chaleur (103) et le cadre en forme de U (102) est réalisé d'un seul tenant à partir de la même tôle ou du même bloc métallique ;
au moins une entrée de liquide (105), utilisée pour le raccordement à une canalisation externe afin que le liquide de refroidissement s'écoule dans la chambre d'écoulement de liquide (L) ;
au moins une sortie de liquide (106), utilisée pour le raccordement à une autre conduite externe permettant au liquide de refroidissement de s'écouler hors de la chambre d'écoulement de liquide (L) ;
dans laquelle l'entrée de liquide (105) et la sortie de liquide (106) sont disposées sur le même côté ou sur des côtés différents de la plaque de dissipation de chaleur à refroidissement par liquide (10).

2. Plaque de dissipation de chaleur à refroidissement par liquide (10, 20, 30, 40) selon la revendication 1, dans laquelle les composants de dissipation de chaleur (100, 110, 120, 130, 140, 150) comprenant les montants de dissipation de chaleur (103) et le cadre en forme de U (102) sont réalisés d'un seul tenant à partir de la même tôle ou du même bloc métallique, et la tôle ou le bloc métallique est en alliage de magnésium ou en alliage d'aluminium.

3. Plaque de dissipation de chaleur à refroidissement par liquide (10, 20, 30, 40) selon la revendication 1, dans laquelle la plaque de dissipation de chaleur à refroidissement par liquide (10, 20, 30, 40) est constituée de deux éléments de dissipation de chaleur (100, 110, 120, 130, 140, 150) s'emboîtant l'un dans l'autre, leurs faces intérieures (1011) étant tournées l'une vers l'autre, puis soudés par soudage au laser.

4. Plaque de dissipation de chaleur à refroidissement par liquide (10, 20, 30, 40) selon la revendication 1, dans laquelle la chambre d'écoulement de liquide (L) comprend au moins un guide d'écoulement (300).

5. Plaque de dissipation de chaleur à refroidissement par liquide (10, 20, 30, 40) selon la revendication 1, dans laquelle la plaque de dissipation de chaleur à refroidissement par liquide (10, 20, 30, 40) est en forme de plaque d'une longueur de 250 mm à 600 mm de longueur, de 150 mm à 450 mm de largeur et de 10 mm à 30 mm d'épaisseur.

6. Plaque de dissipation de chaleur à refroidissement par liquide (10, 20, 30, 40) selon la revendication 1, dans laquelle le liquide de refroidissement est de l'eau.

7. Module de batterie au lithium (S100, S200), comprenant une pluralité de plaques de dissipation de chaleur à refroidissement par liquide (10, 20, 30, 40) selon la revendication 1 et une pluralité de batteries au lithium en forme de feuille ou de plaque (500), dans lequel les plaques de dissipation de chaleur à refroidissement par liquide (10, 20, 30, 40) sont disposées en alternance entre la pluralité de batteries au lithium en forme de feuille ou de plaque (500).

8. Module de batterie au lithium (S100, S200) selon la revendication 7, comprenant au moins une batterie au lithium en forme de feuille ou de plaque (500) entre deux plaques de dissipation de chaleur à refroidissement par liquide adjacentes (10, 20, 30, 40).

9. Module de batterie au lithium (S100, S200) selon la revendication 7, comprenant deux batteries au lithium en forme de feuille ou de plaque (500) entre deux plaques de dissipation de chaleur à refroidissement par liquide adjacentes (10, 20, 30, 40).
